# EUROPEAN PATENT APPLICATION

(11) **EP 3 506 586 A1**
(43) Date of publication of application: **03.07.2019**
(21) Application number: 17211230.2
(22) Date of filing: 29.12.2017
(51) Int. Cl.: H04L 29/06, H04L 12/24

(54) **NETWORK SECURITY INTERFACE COMPONENT AND DATA TRANSMISSION METHOD**

(71) Applicant: Nagravision S.A., 1033 Cheseaux-sur-Lausanne (CH)
(72) Inventor: WYSEUR, Brecht, 1033 Cheseaux-sur-Lausanne (CH); KURSAWE, Klaus, 1033 Cheseaux-sur-Lausanne (CH)
(74) Representative: Ipside

(57) **Abstract**

In overview, disclosed components and methods relate to a network security interface component with a first network interface and a second network interface, separate from the first network interface, connected by a unidirectional connection. The unidirectional connection allows data transfer from the first network interface to the second network interface and prevents data transfer from the second network interface to the first network interface via the unidirectional connection. The network security interface component also includes an authentication module. The authentication module adds authentication data to data received at the first network interface. In this way, a network component is provided in which the first network interface is shielded from the second network interface and in which authentication data can be provided for data received at the first interface, by which the data can subsequently be authenticated as having passed through the network security interface component.

## Description

### FIELD

The present disclosure relates to a network security interface component and a corresponding data transmission method, in particular, to a component and method which enable authentication data to be added to data received at the component and for the data to be securely transmitted onwards.

### BACKGROUND

Industrial control systems, such as supervisory control and data acquisition (SCADA) systems or smart grid systems, heavily rely on sensor data to ensure correct and secure operational behaviour. To ensure that data transmitted from a sensor, or indeed any remote terminal unit (RTU), to a control centre is authentic, authentication tags, signatures or any other suitable authentication data are added to the data that is sent from the sensor to the control centre. However, not all sensors are equipped to provide authentication data, in which case the control centre is unable to determine whether the data it receives from the sensors is authentic. This problem applies equally to generic internet of things (IoT) use-cases, where data from different data sources is aggregated, and decisions are made based upon this data. The data sources are often not equipped to provide authentication data. As such, there is a need to provide authentication data by which data produced by data sources can be authenticated, where the data sources are incapable of themselves providing the data.

Further, data sources, such as sensors and RTUs, are often prone to cyber attacks. Data from an attacked data source may be tampered with resulting in erroneous data being provided to a data aggregator, such as a control centre. This may result in incorrect operational behaviour leading to significant security and safety risks, particularly in industrial control systems. As such, there is also a need to protect data sources from cyber attacks.

### BRIEF DESCRIPTION OF THE DRAWINGS

Various embodiments are now described by way of example for the purpose of explanation and illustration, with reference to the accompanying drawings in which:
FIG.1 illustrates a data transmission system comprising a first network in communication with a second network via a network security interface component;
FIG.2 illustrates a network security interface component in further detail; and
Figure 3 illustrates a process for transmitting data.

### DETAILED DESCRIPTION OF THE DRAWINGS

In overview, disclosed components and methods relate to a network security interface component with a first network interface and a second network interface, separate from the first network interface, connected by a unidirectional connection. The unidirectional connection allows data transfer from the first network interface to the second network interface and prevents data transfer from the second network interface to the first network interface via the unidirectional connection. The network security interface component also includes an authentication module. The authentication module adds authentication data to data received at the first network interface. In this way, a network component is provided in which the first network interface is shielded from the second network interface and in which authentication data can be provided for data received at the first interface, by which the data can subsequently be authenticated as having passed through the network security interface component.

In some aspects of the disclosure, a network security interface component is provided. The network security interface component comprises a first network interface and a second network interface separate from the first network interface. A unidirectional connection connects the first network interface to the second network interface. The unidirectional connection is configured to allow data transfer from the first network interface to the second network interface via the unidirectional connection and to prevent data transfer from the second network interface to the first network interface via the unidirectional connection. An authentication module is connected between the first network interface and the unidirectional connection and is configured to add authentication data to data received at the first network interface, by which the data received at the first network interface can be authenticated. In this way, the data can be provided with authentication data before it is transmitted via the unidirectional connection to the second network interface.

Advantageously, data received at the first network interface from a data source, such as a sensor, can be provided with associated authentication data such that it can be authenticated by a recipient as having passed through the network security component by verifying the authentication data. The recipient may use an appropriate verification function to verify the authentication data and thereby authenticate the data. In the context of sensor networks, this means that the recipient of data sent from a sensor to the recipient via network security interface component can be reasonably sure that the data originated from the sensor and that it has not been tampered with. An example of authentication data is a digital signature that can be verified using a public key associated with a certificate corresponding to a private key used to sign the data. Another example is a Message Authentication Code that can be verified by a corresponding verification function. In this way, data produced by data sources which do not comprise any means for providing authentication data can be provided with associated authentication data by the network security interface component, by which the data can be authenticated.

Additionally, the unidirectional connection enables the device or network to transmit data via the component whilst preventing any data being transmitted back to the data source via the network security interface component, thereby protecting the authentication module from tampering attempts from a potentially unsecure network connected to the second network interface. Further, the functionality of the network security interface component is provided in the form of a component which is both an inexpensive and scalable as the component can be configured to be used with a variety of network types and it can be massed produced independently of any other network components, such as sensors and other data sources, reducing individual component cost. A chip-based solution is much less expensive than existing data-diode systems, and flexible, because any kind of protocol can be implemented: the solution is independent of protocol specifications.

In some embodiments, the data received at the first network interface may comprise individual packets of data. The authentication module may be configured to identify data in the received data, for example data packets in the received data packets, which does not comprise authentication data and to add authentication data to the identified data which does not comprise authentication data, for example by adding authentication data to identified data packets. Optionally, the authentication module may be configured to identify received data which comprises authentication data, for example data packets which already include authentication data, and to allow the identified data which comprises authentication data, for example identified data packets which already include authentication data, to be transmitted via the unidirectional connection to the second network interface without adding authentication data. For example, where the data is received in the form of individual packets of data, the identification step in each case may comprise analysing the received data individual data packet by individual data packet to identify those packets which have and those which do not have authentication data.

Advantageously, the network security interface component is able to receive data from a variety of data sources, some of which may include authentication data and some of which may not, and the network security interface component is able to add authentication data to data which does not already include authentication data and allow data which already comprises authentication data to be transmitted to the second interface without adding authentication data.

In some aspects of the disclosure, a method of transmitting data, performed at a network security interface component is provided, the network interface component comprising a first network interface, a second network interface separate from the first network interface, a unidirectional connection connecting the first network interface to the second network interface, and an authentication module, connected between the first network interface and the unidirectional connection, all of the type described above. The method comprises the steps of receiving data at the first network interface, adding authentication data to data received at the first network interface by which the data received at the first network interface can be authenticated, and transmitting the data received at the first network interface and the authentication data to the second network interface via the unidirectional connection.

In some embodiments, the network security interface component may further comprise an integrated circuit and the unidirectional connection and the authentication module are provided on the integrated circuit. In some embodiments, the first and second network interfaces may also be provided on the integrated circuit. The integrated circuit may also implement other functions of the component and may comprise a System on a Chip. The integrated circuit may be isolated from other functions of the component and may provide no connections other than the two network interfaces. For example, the integrated circuit may implement an isolated environment, such as a Secure Element. Advantageously, further security benefits are provided as it is harder to physically tamper with the functions provided by the network security interface component when it is implemented as an integrated circuit.

In some embodiments, the data received at the first network interface may comprise sensor data produced by one or more sensors. In some embodiments, irrespective of the nature of the data, the unidirectional connection may comprise a data diode. In some embodiments, the data diode may be an optical data diode.

In some embodiments, the first network interface and the second network interface each comprise a respective processor. Advantageously, in this way, the processing of network communications is handled by a respective separate and dedicated processor for each of the two networks. The processors may only be connected by the unidirectional connection to provide further security.

It will be understood that, in the context of the present disclosure, a "unidirectional connection" is a connection on the network security interface component which permits transmission of data in a first direction along the connection and prevents transmission of data in the reverse direction.

Likewise, in the context of the present disclosure, a "data diode", as understood in the art, allows one way transmission of data through it. For example, in embodiments where it is present, the data diode of the unidirectional connection allows data to be transmitted from the first network interface to the second network interface but prevents data transmission in the reverse direction. An example data diode is an optical data diode which comprises a light source, such as an LED, the light output of which is incident upon a light sensor, such as a phototransistor. The first network interface may be in communication with the light source and the second network interface processor may be in communication with the light sensor. Data can be transmitted from the first network interface to the light source which can transmit the data to the second network interface via the light sensor. It will be apparent that the light sensor is unable to transmit data to the light source and, as such, data cannot travel in the reverse direction. In this way, diode like functionality is provided. It will be well understood that other data diodes may be used, for example an RS-232 cable where a pin is removed. Usually, there are 3 types of pins: transmit, receive, and ground. If the receive pins are removed, then data can only be transmitted.

The term "network interface" will be understood to mean a feature of the network security interface component which enables it to connect with and communicate with a network. Examples of a network interface include, but are not limited to including, a connection port (such as an ethernet port), a wired or wireless transceiver, a network interface processor, and a network interface controller (NIC). The network interface implements a network protocol that enables communication of data over the network. Typically, the protocol involves transmitting packets of data that may be either produced one by one by a data source (for example each packet corresponding to a sensor reading) or correspond to a part of a large item of data, packetized into a number of packets. Typically, a data packet will have a header identifying the data packet and a payload, for example a sensor reading or portion of a larger item of data. Authentication data may be added to a data packet either in the header or in the payload.

The term "integrated circuit" has its conventional meaning, namely it is a circuit in which all or some of the circuit elements are inseparably associated and electrically interconnected so that it is considered to be indivisible for the purposes of construction and commerce. An example of an integrated circuit is a "system on a chip" (SOC). An SOC is an integrated circuit in which all the components needed for a computer or other system are included on a single chip. All of the embodiments of the integrated circuits described herein could, in some embodiments, be a system on a chip.

A Secure Element has its conventional meaning of a tamper-resistant platform (typically a one chip secure microcontroller) capable of securely hosting applications and their confidential and cryptographic data (e.g. key management) in accordance with the rules and security requirements set forth by a set of well-identified trusted authorities.

The second network interface (or second interface processor where present) being "separate" from the first network interface (or first interface processor where present) requires that the interfaces (or processors) are separate entities on the component (or integrated circuit where present). For example, they may be located at separate areas of the component (or separate areas of a substrate of the integrated circuit) and only be connected by the unidirectional connection described herein.

An operational technology (OT) network enables communication between hardware and software dedicated to detecting or causing changes in physical processes through direct monitoring and/or control of physical devices such as sensors, valves, pumps, and the like. OT networks enable computer systems to monitor or alter the physical state of a system. Examples include control system networks for a power station or the control network for a rail system.

If data, such as sensor data produced by a sensor in the first network, has been "authenticated", this is to be understood to mean that authentication data associated with the sensor data, such as a digital signature or a message authentication code, has been verified via the mechanisms described herein or well known to the skilled person so that the recipient of the data can be reasonably sure that the data originated from the sensor and that it has not been tampered with.

"Authentication data" is any data which enables data, such as sensor data produced by a sensor in the first network, to be authenticated. Various examples are given herein. A "digital signature" is one such example. A digital signature is a mathematical scheme for demonstrating the authenticity of digital messages or documents, such as data packets. A message authentication code (MAC) data tag is another example of authentication data.

If authentication data has been "verified", this is to be understood to mean that a verification function, for example of the types described herein, has been used to determine that the authentication data is as expected hence authenticating data that is associated with the authentication data (from which the authentication has been derived).

Some specific embodiments are now described by way of illustration with reference to the accompanying drawings in which like reference numerals refer to like features.

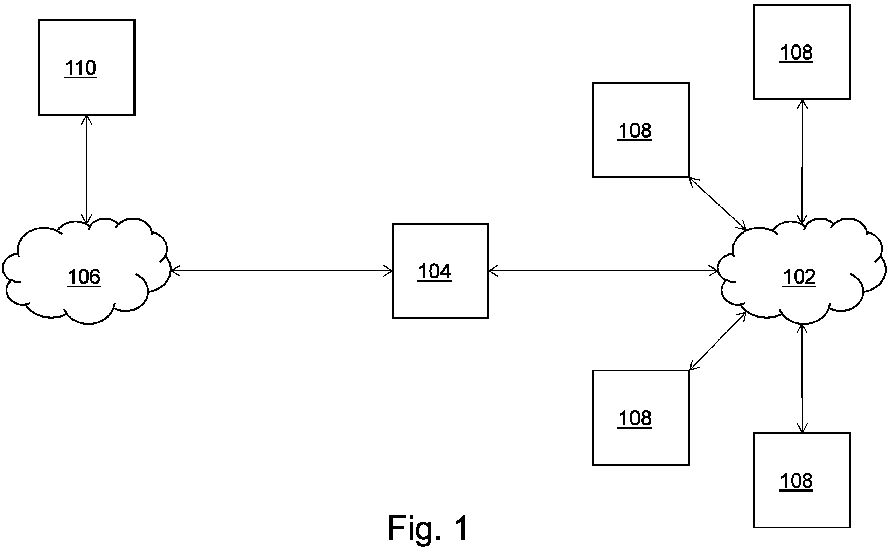

With reference to Figure 1, a network security interface component 104 is in communication with a first network 102. The first network 102 is a secure, for example an operational technology (OT) or private, network of sensors 108 which output measurement data. The output measurement data may relate to pressure, temperature, radioactivity, current, voltage, weight, flow, humidity, acceleration and/or positioning data, amongst other things. The network security interface component 104 is also in communication with a second network 106. The second network 106 is a public, and hence less secure, network, such as the internet. The second network 106 is in further communication with a computer system 110 for further processing the measurement data output of sensors 108 in communication with the first network 102.

Although embodiments are described in relation to sensors 108, the sensors 108 could equally be any device which comprises a data source suitable for providing output data.

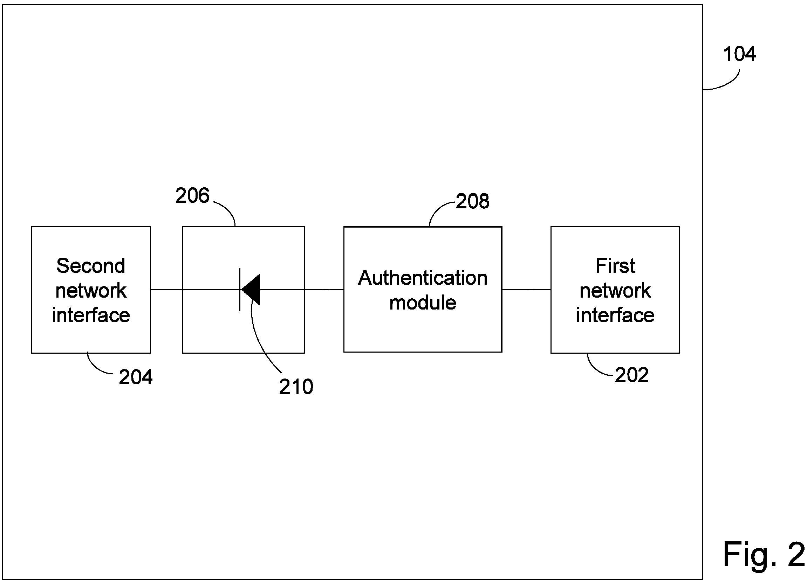

With reference to Figure 2, some embodiments of the network security interface component 104 are now described. The network security interface component 104 comprises a first network interface 202, a second network interface 204, a unidirectional connection 206, the unidirectional connection 206 comprising a data diode 210, and an authentication module 208.

The network security interface component 104 is in communication with the first network 102 via the first network interface 202. Measurement data from sensors 108 in communication with the first network 102 is received at the network security interface component 104 via the first network interface 202. The network security interface component 104 is in communication with the second network 106 via the second network interface 204. Measurement data received at the network security interface component 104 via the first network interface 202 may be communicated to the second network interface 204 via the unidirectional interconnect 206. The measurement data may then be transmitted to the computer system 110 via the second network 106 for further processing, from the second network interface 204 of the network security interface component 104.

The unidirectional connection 206 is the only communication path between the first network interface 202 and the second network interface 204. The data diode 210 of the unidirectional connection 206 is arranged to allow data to be transmitted from the first network interface 202 to the second network interface 204 via the unidirectional connection 206 and prevent data from being transmitted in the reverse direction. In some embodiments, the data diode is an optical data diode.

Although the described embodiment makes use of a data diode 210 in order to provide the unidirectional functionality of the unidirectional connection 206, other mechanisms may be used to provide the unidirectional functionality.

The first network interface 202 and the second network interface 204 are separated from one another on the network security interface component 104.

Each of the first and second network interfaces may include, but are not limited to including, a connection port (such as an ethernet port), a wired or wireless transceiver, a network interface processor, and a network interface controller (NIC).

The authentication module 208 is connected between the first network interface 202 and the unidirectional connection 206 and is arranged to apply cryptographic functions to data received via the first network interface 202 from one of the sensors 108 via the first network 102 so as to generate authentication data associated with the received data which can be verified by another entity. In this way, the authentication module 208 can add authentication data to measurement data received from the sensors 108. As such, authentication data can be provided for sensors 108, and any other devices in communication with the first network 102, which are unable to produce their own authentication data.

In order to provide authentication data for data received at the first network interface 202, such as the measurement data sent by one of the sensors 108, an authentication function is applied to the data. The authentication function may be a message authentication code (MAC) algorithm, a signing algorithm of a digital signature scheme, or a cryptographic hash function. Any suitable authentication scheme may be used.

In order to verify authentication data received at the computer system 110, the computer system 110 uses a verification function to verify received authentication data.

In the example of a MAC algorithm being used to provide authentication data for data received from one of the sensors 108, via the first network 102, which is to be transmitted from the first network interface 202 to the second network interface 204 via the unidirectional connection 206, the authentication module 208 runs the data through a MAC algorithm (which is the authentication function in this example) using a key to produce a MAC data tag (which is the authentication data in this example). The data and the MAC tag are then sent to the computer system 110 from the second network interface 204 via second network 106. The computer system 110 in turn runs the received data through the same MAC algorithm (which is the verification function in this example) using the same key, producing a second MAC data tag. The computer system 110 then compares the first MAC tag to the second generated MAC tag. If they are identical, the computer system 110 can safely assume that the data was not altered or tampered with during transmission and a degree of data integrity is assured.

In the example of a digital signature scheme being used to provide authentication data for data received from one of the sensors 108, via the first network 102, which is to be transmitted from the first network interface 202 to the second network interface 204 via the unidirectional connection 206, a key generation algorithm first selects a private key uniformly at random from a set of possible private keys. The key generation algorithm outputs the private key and a corresponding public key. The private key is communicated to the authentication module 208 and the public key is communicated to the computer system 110. The authentication module 208 uses a signing algorithm (which is the authentication function in this example) to produce a signature (which is the authentication data in this example) using the data (or, alternatively, a hash or digest of the data) and the private key. The signature is then sent to the computer system 110 along with the data. Upon receipt, the signature, the data (or a hash or digest of the data where such has been used by the signing algorithm), and public key are run through a signature verifying algorithm (which is the verification function in this example) by the computer system 110, and the authenticity of the data is either accepted or rejected dependent upon the outcome.

Cryptographic keys used by the authentication and verification functions may be session keys computed using a key sharing protocol which is common to both the authentication module 208 and the recipient of the data subject to the cryptographic function, for example the computer system 110. The cryptographic keys may be computed by the authentication module 208 or the computer system 110.

In some embodiments, data transmitted from the first network interface 202 to the second network interface 204 is provided with authentication data generated by the authentication module 208. The recipient computer system 110, is then able to authenticate the data by verifying the authentication data using a verification function.

In some embodiments, the data received at the first network interface 204 comprises individual packets of data produced by the sensors 108. Some of the sensors 108 transmit packets of data to the network security interface component 104 comprising authentication data alongside measurement data. Some of the sensors 108 transmit packets of data to the network security interface component 104 which do not comprise any authentication data.

In some embodiments, the authentication module 208 is configured to identify received packets of data which do not comprise authentication data and to add authentication data to the identified packets of data which do not comprise authentication data. In some embodiments, the authentication module 208 is configured to identify received packets of data which comprise authentication data and to allow the identified packets of data which comprise authentication data to be transmitted via the unidirectional connection 206 to the second network interface 204 without adding authentication data.

In some embodiments, some or all of the components of the network security interface component 104 are provided on an integrated circuit. For example, in some embodiments, one or more or the first network interface 202, the second network interface 204, the unidirectional connection 206 and the authentication module 208 are provided on an integrated circuit. In some embodiments, all of the first network interface 202, the second network interface 204, the unidirectional connection 206 and the authentication module 208 are provided on an integrated circuit.

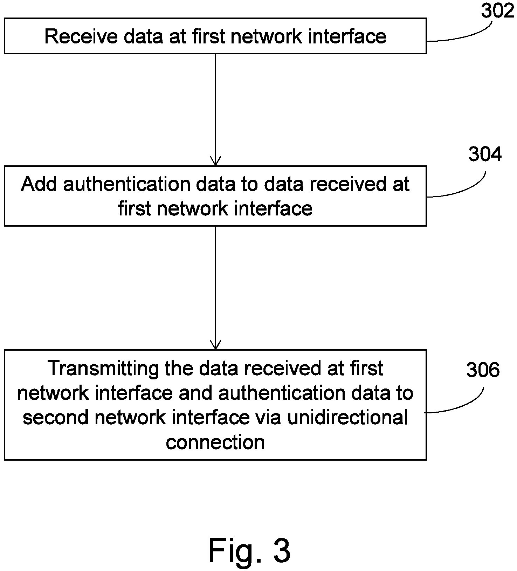

With reference to Figure 3, a method of transmitting data is described that is performed at a network security interface component such as the network security interface component depicted in Figure 2. The method is described in the context of the data transmission system depicted in Figure 1.

At step 302, data is received from one or more of the sensors 108 via the first network 102 at the first network interface 202. In some embodiments, the data is received in the form of discrete packets of data.

At step 304, authentication data is added to the data received at the first network interface 202 by which the data can be authenticated.

In some embodiments, step 304 further comprises identifying data received from one or more of the sensors 108 which does not comprise authentication data and adding authentication data to the identified data which does not comprise authentication data. Where the data received at the first network interface comprises packets of data, this step comprises identifying packets of data received from one or more of the sensors 108 which do not comprise authentication data and adding authentication data to the identified packets.

In some embodiments, step 304 further comprises identifying data received from one or more of the sensors 108 which comprises authentication data and allowing the identified data which comprises authentication data to be transmitted via the unidirectional connection 206 to the second network interface without adding authentication data. Where the data received at the first network interface comprises packets of data, this step comprises identifying packets of data received from one or more of the sensors 108 which comprise authentication data and allowing the identified data packets which comprise authentication data to be transmitted via the unidirectional connection 206 to the second network interface without adding authentication data to the identified packets.

At step 306, the data received at the first network interface 202 and the authentication data are transmitted to the second network interface 204, via the unidirectional connection 206, where they are then transmitted onwards to the computer system 110 via the second network 106 for further processing.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A network security interface component comprising:
a first network interface;
a second network interface separate from the first network interface;
a unidirectional connection connecting the first network interface to the second network interface; and
an authentication module connected between the first network interface and the unidirectional connection,
wherein the unidirectional connection is configured to allow data transfer from the first network interface to the second network interface via the unidirectional connection and to prevent data transfer from the second network interface to the first network interface via the unidirectional connection,
wherein the authentication module is configured to add authentication data to data received at the first network interface by which the data received at the first network interface can be authenticated.

2. The network security interface component of claim 1, wherein the authentication module is configured to identify data received at the first network interface which does not comprise authentication data and to add authentication data to the identified data received at the first network interface which does not comprise authentication data.

3. The network security interface component of any preceding claim, wherein the authentication module is configured to identify data received at the first network interface which comprises authentication data and to allow the identified data received at the first network interface which comprises authentication data to be transmitted via the unidirectional connection to the second network interface without adding authentication data.

4. A method of transmitting data, performed at a network security interface component comprising a first network interface, a second network interface separate from the first network interface, a unidirectional connection connecting the first network interface to the second network interface, and an authentication module connected between the first network interface and the unidirectional connection, wherein the unidirectional connection is configured to allow data transfer from the first network interface to the second network interface via the unidirectional connection and to prevent data transfer from the second network interface to the first network interface via the unidirectional connection, the method comprising the steps of:
receiving data at the first network interface;
adding authentication data to data received at the first network interface by which the data received at the first network interface can be authenticated; and
transmitting the data received at the first network interface and the authentication data to the second network interface via the unidirectional connection.

5. The method of claim 4, wherein the step of adding authentication data to data received at the first network interface comprises the steps of:
identifying data received at the first network interface which does not comprise authentication data; and
adding authentication data to the identified data received at the first network interface which do not comprise authentication data.

6. The method of any of claims 4 and 5, the method comprising the steps of:
identifying data received at the first network interface which comprises authentication data; and
allowing the identified data received at the first network interface which comprises authentication data to be transmitted via the unidirectional connection to the second network interface without adding authentication data.

7. The network security interface component or method of any preceding claim, wherein the data received at the first network interface comprises individual packets of data.

8. The network security interface component or method of any preceding claim, wherein the network security interface component further comprises an integrated circuit and, wherein the unidirectional connection and the authentication module are provided on the integrated circuit.

9. The network security interface component or method of any preceding claim, wherein the data received at the first network interface comprises sensor data produced by one or more sensors.

10. The network security interface component or method of any preceding claim, wherein unidirectional connection comprises a data diode, optionally, wherein the data diode is an optical data diode.

11. The network security interface component or method of any preceding claim, wherein the first network interface and the second network interface each comprise a processor.
